# EUROPÄISCHE PATENTSCHRIFT

(11) **EP 4 391 517 B1**
(45) Veröffentlichungstag und Bekanntmachung des Hinweises auf die Patenterteilung: **29.04.2026**
(21) Anmeldenummer: 23217059.7
(22) Anmeldetag: 15.12.2023
(51) Int. Cl.: H04N 1/60, B41F 33/00

(54) **VERFAHREN ZUR POSITIONSBESTIMMUNG VON SPEKTRALMESSUNGEN**
METHOD FOR DETERMINING THE POSITION OF SPECTRAL MEASUREMENTS
PROCÉDURE DE DÉTERMINATION DE LA POSITION DES MESURES SPECTRALES

(30) Priorität: 19.12.2022 DE 102022133947
(43) Veröffentlichungstag der Anmeldung: 26.06.2024
(73) Patentinhaber: manroland Goss web systems GmbH, 86153 Augsburg (DE)
(72) Erfinder: Fejfar, Florian, 81476 München (DE)

(56) Entgegenhaltungen:
- EP-A1- 2 537 677
- DE-A1- 102018 219 138
- US-A- 5 774 225

## Beschreibung

Die Erfindung betrifft ein Verfahren zur Evaluierung von Spektraldaten eines auf ein Substrat aufgebrachten Druckbildes, wobei das Druckbild mittels digitaler Bilddaten abgebildet wird.

Bei Druckmaschinen kommen zur Qualitätsüberwachung des Druckbildes unterschiedliche Sensoren zum Einsatz. Dies sind zum einen Sensoren für die Überprüfung der Passerhaltigkeit des Druckbildes, das heißt für die Überprüfung der korrekten Position der Grundfarben, welche für einen mehrfarbigen Druck verwendet werden, zueinander. Dies sind darüber hinaus auch Bildüberwachungssysteme, die das auf das Substrat aufgedruckte Druckbild in Gänze erfassen und Abweichungen im Druck wie beispielsweise Fehlstellen, Tonen oder Verschmutzungen erfassen und auswerten.

Ferner ist die Überwachung der Farbe des Druckbildes von entscheidender Bedeutung, wobei es hierbei mehrere aus dem Stand der Technik bekannte Verfahren und somit mehrere aus dem Stand der Technik bekannte Sensoren gibt.

Zur Überwachung einer gleichbleibenden Farbgebung kommen sogenannte als Farbdichtemessgeräte oder Densitometer bekannte Vorrichtungen zum Einsatz, mit welchen von den Grundfarben, mit welchen ein farbiges Druckbild aufgebaut ist - in der Regel sind dies die Farben Cyan, Magenta, Gelb und Schwarz - die Farbdichtewerte ermittelt werden. Die Farbdichte ist ein an die Erfordernisse der Drucktechnik angepasstes Maß der auf das Substrat aufgetragenen Farbmenge und wird aus dem Remissionsgrad berechnet. Die Farbdichtewerte können jedoch keine Auskunft über das Farbempfinden beziehungsweise die tatsächliche Farbwahrnehmung oder über die Einhaltung gewisser Farbwerte geben.

Somit kommen im Bedarfsfall auch sogenannte Spektralphotometer zum Einsatz, mit denen die Spektraldaten erfasst werden können, aus welchen dann farbmetrische Daten wie beispielsweise LAB-Daten ermittelt werden können. Anhand dieser Daten kann somit die tatsächliche Farbe beziehungsweise die Farbwahrnehmung durch den Betrachter eines Druckproduktes abgebildet werden. Somit kommen bei Druckmaschinen, bei welchen in hohem Maße Wert auf die exakte Wiedergabe einer oder mehrerer bestimmter Farben gelegt wird, Spektralphotometer zum Einsatz. Diese erfassen in der Regel bestimmte definierte Bildpunkte oder Bildausschnitte des Druckbildes während der Produktion, das heißt im Falle einer Rollendruckmaschine bei voller Produktionsgeschwindigkeit, die Erfassung der zu erfassenden Bildpunkte oder Bildausschnitte wird getaktet über Zeitintervalle, Gebersignale oder vergleichbare Signale gesteuert.

Spektralphotometer haben die Eigenschaft, dass diese das von dem zu erfassenden Bildpunkt reflektierte Licht hinsichtlich ihrer Wellenlängen erfassen, woraus anhand der ermittelten Spektraldaten die Farbe eines erfassten Bildpunktes sehr exakt bestimmt werden kann. Spektralphotometer haben aufgrund dieser Funktionsweise jedoch den Nachteil, dass diese keine bildgebenden Sensoren sind und den erfassten Bildausschnitt nicht bildlich erfassen und dieser somit nicht wiedergebbar ist.

Ferner kommt es bei Druckmaschinen aufgrund von Dehnung des Substrates, Bahnverlauf in und/oder senkrecht zur Bahnlaufrichtung, nicht exakt registerhaltigem Druck etc. zu Abweichungen zwischen der theoretischen Position und der tatsächlichen Position des Druckbildes zu einem Bezugspunkt, wie beispielsweise einem Sensor zur Qualitätserfassung.

Die US 5 774 225 A1 offenbart ein Verfahren, bei welchem der Zielort einer Spektralmessung festgelegt wird, wobei ein bildgebener Sensor zusätzlich neben einem Spektralsensor diesen zu messenden Ort erfasst und somit sowohl die Position des Zielortes der Spektralmessung als auch die Position des tatsächlichen Messortes erfasst, wobei bei Abweichung des Messortes vom Zielort die ermittelten Farbwerte dennoch für die Farbregelung verwendet wird.

Die EP 2 537 667 A1 offenbart ein Bahnbeobachtungssystem mit integriertem Sensor zur Spektralmessung, wobei der Messort des Farbwertes in dem Monitor des Bahnbeobachtungssystems optisch angezeigt wird, so dass ein Bediener zumindest visuell den Ort der Farbmessung erkennen und gegebenenfalls verändern kann.

Die DE 10 2018 219 138 A1 offenbart die Erfassung von Farbwerten bei einem Inkjet-Druckverfahren, wobei der zu erfassende Teil des Druckbildes ausschließlich von einem Sensor zur Ermittlung der Farbwerte erfasst wird.

Aufgrund der fehlenden Fähigkeit der Bilderfassung von Spektralphotometern und den möglichen Positionsabweichungen des bedruckten Substrates kann somit nicht überprüft werden, ob der zur Erfassung vorgesehene Bildpunkt oder Bildausschnitt auch tatsächlich vom Spektralphotometer erfasst wurde. Im Falle von Abweichungen oder Schwankungen der erfassten Ist-Spektralwerte des erfassten Bildpunktes oder Bildausschnittes des Druckbildes kann somit nicht ohne zusätzlichen erheblichen Aufwand erkannt werden, ob die Abweichungen oder Schwankungen der Ist-Spektralwerte von etwaigen Farbschwankungen herrühren, oder ob diese in der rein räumlichen Abweichung zwischen dem zu erfassenden Bildpunkt oder Bildausschnitt und dem tatsächlich erfassten Bildpunkt oder Bildausschnitt begründet sind.

Es ist die Aufgabe der Erfindung, die tatsächliche Position des von einem Spektralphotometer tatsächlich erfassten Bildpunkt oder Bildausschnitt - nachfolgend als erster Erfassungsbereich bezeichnet - zu bestimmen.

Die Aufgabe wird durch ein Verfahren gelöst, welches folgende Verfahrensschritte umfasst:
a) Festlegen mindestens eines in dem Druckbild liegenden Zielbereiches, nämlich entweder Festlegung eines ersten Zielbereiches mit einer Position oder Festlegung eines ersten Zielbereiches mit der Position und eines zweiten Zielbereiches mit der Position,
b) Erfassen eines in dem Druckbild liegenden, dem ersten Zielbereich entsprechenden ersten Erfassungsbereiches mittels eines Spektralphotometers und Ermittlung von Ist-Spektraldaten des ersten Erfassungsbereiches,
c) Zeitgleiches oder zeitlich versetztes Erfassen des in dem Druckbild liegenden ersten Zielbereiches entsprechenden zweiten Erfassungsbereiches oder im Falle der Bestimmung des zweiten Zielbereiches zeitgleiches oder zeitlich versetztes Erfassen eines in dem Druckbild liegenden, dem zweiten Zielbereich entsprechenden zweiten Erfassungsbereich mittels eines bildgebenden Sensors und Ermittlung von Ist-Bilddaten des zweiten Erfassungsbereiches,
d) Vergleichen der durch den bildgebenden Sensor erfassten Ist-Bilddaten mit den Bilddaten und Bestimmung der Position des zweiten Erfassungsbereiches im Druckbild,
e) Bestimmung der Position des ersten Erfassungsbereiches im Druckbild anhand der Position des zweiten Erfassungsbereiches im Druckbild sowie einer definierten Positionsdifferenz des ersten Erfassungsbereiches zum zweiten Erfassungsbereich, dadurch gekennzeichnet, dass bei Überschreiten eines Grenzwertes einer Positionsabweichung (xa,ya) zwischen der Position des ersten Zielbereiches und der Position des ersten Erfassungsbereiches Verwerfen der Ist-Spektraldaten als ungültig.

Diese Lösung hat den Vorteil, dass damit zuverlässig bestimmt werden kann, ob tatsächlich am vorgesehenen Bildpunkt oder Bildausschnitt gemessen wurde, da bei einer zumindest zu großen geometrischen Abweichung des ersten Erfassungsbereiches zum ersten Zielbereich ein anderer Bildpunkt oder Bildausschnitt mit sehr wahrscheinlich anderer vorgegebener Farbe gemessen würde, was eine Abweichung der vom Spektralphotometer erfassten Spektraldaten und der daraus ermittelten Farbwerte begründen würde.

Die Bestimmung der geometrischen Lage des Erfassungsbereiches ist somit insbesondere wenngleich nicht ausschließlich dann von Vorteil, wenn die Erfassung der Spektraldaten direkt im Druckbild und nicht an hierfür aufgedruckten Marken oder Druckkontrollstreifen ermittelt wird, da die Erfassungsbereiche für spezifische Farben in einem nicht durch Marken oder Druckkontrollstreifen beeinträchtigten Druckbild in der Regel hinsichtlich der geometrischen Ausbreitung begrenzt sind.

Als bildgebender Sensor kann beispielsweise eine Flächenkamera oder eine Zeilenkamera eingesetzt werden, hinsichtlich der verwendeten Technologie kann für den bildgebenden Sensor beispielsweise eine CCD-Kamera oder ein CMOS-Sensor im Sinne einer CMOS-Kamera eingesetzt werden.

Gemäß der Erfindung werden bei Überschreiten eines Grenzwertes einer Positionsabweichung zwischen der Position des ersten Zielbereiches und der Position des ersten Erfassungsbereiches die Ist-Spektraldaten als ungültig betrachtet und verworfen, so dass derartige Ist-Spektraldaten nicht für die farbliche Auswertung und nicht für die Korrektur der Farbgebung der relevanten Druckmaschine verwendet wird, da bei einer zu großen geometrischen Abweichung des ersten Erfassungsbereiches vom ersten Zielbereich die Farbwerte in den meisten Fällen nicht mehr stimmen können. Würden derartige Spektralwerte dennoch zur Farbkorrektur verwendet werden, würde die gesamte Farbgebung aufgrund der geometrisch gesehen falschen Messung verfälscht werden.

Im Falle von Bogendruckmaschinen oder Rollendruckmaschinen ist es gemäß einer Ausgestaltung der Erfindung vorteilhaft, die oben angeführten Verfahrensschritte b) bis e) nicht nur einmalig oder sporadisch auszuführen, sondern für mindestens ein nachfolgendes Druckbild zu wiederholen.

Hinsichtlich einer durchgängigen Qualitätsüberprüfung und hinsichtlich einem durchgängigen Qualitätsmanagement ist es vorteilhaft, die oben angeführten Verfahrensschritte b) bis e) bei jedem Druckprodukt, zu wiederholen. Zum einen können somit Abweichungen der aktuellen Farbgebung von der vorgegebenen Farbgebung sehr frühzeitig erkannt werden, so dass sehr frühzeitig entgegengewirkt werden kann, zum anderen kann damit die Qualität der hergestellten Druckprodukte durchgängig dokumentiert werden.

Gemäß einer weiteren Ausgestaltung der Erfindung werden im Verfahrensschritt a) eine Mehrzahl von ersten Zielbereichen oder eine Mehrzahl von ersten Zielbereichen und eine Mehrzahl von zweiten Zielbereichen festgelegt, und es werden die Verfahrensschritte b) bis e) für die Mehrzahl der Zielbereiche und den jeweils zugehörigen Erfassungsbereichen durchgeführt.

Eine derartige Ausgestaltung hat den Vorteil, dass somit die Farbgebung an einer Mehrzahl von unterschiedlichen Bildpunkten oder Bildausschnitten und somit im Bedarfsfalle für unterschiedliche Farben durchgeführt werden kann, so dass eine über das Druckbild relativ gleichmäßig verteilte Qualitätsüberprüfung möglich ist.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: Ein beispielhafter Aufbau einer Erfassungsvorrichtung mit einem Erfassungsbereich
- Fig. 2: Ein beispielhafter Aufbau einer Erfassungsvorrichtung mit einem ersten Erfassungsbereich und einem getrennten zweiten Erfassungsbereich
- Fig. 3: Ein beispielhaftes Druckbild mit nur einem Zielbereich und hierzu zugehörige Druckprodukte mit einem dem Zielbereich entsprechenden Erfassungsbereich
- Fig. 4: Ein beispielhaftes Druckbild mit einem ersten Zielbereich und hierzu zugehörige Druckprodukte mit einer geometrischen Abweichung des dem Zielbereich entsprechenden Erfassungsbereich
- Fig. 5: Ein beispielhaftes Druckbild mit einem ersten und einem zweiten Zielbereich und hierzu zugehörige Druckprodukte mit einem den ersten und zweiten Zielbereichen entsprechenden ersten und zweiten Erfassungsbereichen

Da aufgrund der Kombination eines Spektralphotometers 7 mit einem bildgebenden Sensor 4 mehrere geometrische Möglichkeiten ausführbar sind, wird nachfolgend zunächst eine derartige Erfassungsvorrichtung 8 erläutert.

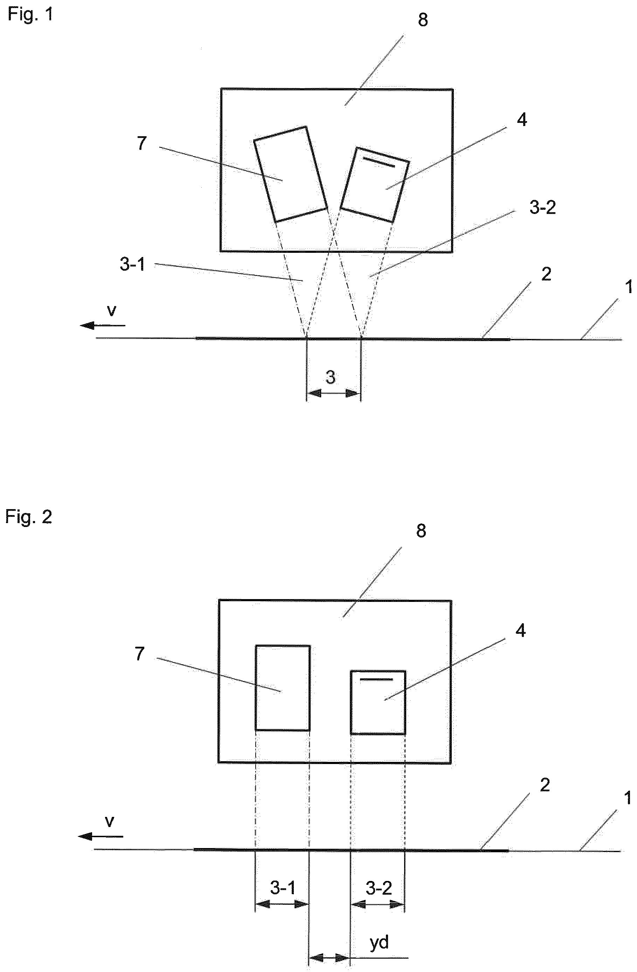

Fig. 1 zeigt eine Erfassungsvorrichtung 8, in welche ein Spektralphotometer 7 und ein bildgebender Sensor 4 derart eingebaut sind, dass diese bei einem definierten Abstand der Erfassungsvorrichtung 8 zur mit einem Druckbild 2 bedruckten Substrat 1, welches bei einer Farbmessung innerhalb einer Druckmaschine mit der Substratgeschwindigkeit v unterhalb der Erfassungsvorrichtung 8 bewegt wird, so dass das Spektralphotometer 7 als auch der bildgebende Sensor 4 die der Erfassungsvorrichtung 8 zugewandte Seite des Substrats 1 erfassen können.

Das Spektralphotometer 7 weist einen ersten Erfassungsbereich 3-1 auf, so dass Bildpunkte oder Bildausschnitte, die innerhalb dieses ersten Erfassungsbereiches 3-1 liegen, vom Spektralphotometer 7 erfasst werden und deren Ist-Spektraldaten ermittelt werden. Der nachfolgend verwendete Begriff "erster Erfassungsbereich 3-1" umfasst sowohl den geometrischen Bereich, den das Spektralphotometer 7 erfasst, und/oder die darin befindlichen Bildpunkte oder Bildausschnitte des Druckbildes 2.

Der bildgebende Sensor 4, welcher beispielsweise als CCD-Kamera oder als CMOS-Sensor ausgebildet ist, weist einen zweiten Erfassungsbereich 3-2 auf, so dass Bildpunkte oder Bildausschnitte, die innerhalb dieses zweiten Erfassungsbereiches 3-2 liegen, vom bildgebenden Sensor 4 erfasst werden und deren Ist-Bilddaten, welche im Weitesten Sinne einem digitalen Foto entsprechen, ermittelt werden. Der nachfolgend verwendete Begriff "zweiter Erfassungsbereich 3-2" umfasst sowohl den geometrischen Bereich, den der bildgebende Sensor 4 erfasst, und/ oder die darin befindlichen Bildpunkte oder Bildausschnitte des Druckbildes 2.

Die in Fig. 1 dargestellte Erfassungsvorrichtung 8 derart ausgestaltet, dass auf dem Substrat 1 der erste Erfassungsbereich 3-1 des Spektralphotometers 7 identisch ist mit dem zweiten Erfassungsbereich 3-2. Das Spektralphotometer 7 und der bildgebende Sensor 4 sind in der Form zueinander angeordnet, dass sowohl das Spektralphotometer 7 als auch der bildgebende Sensor 4 denselben Erfassungsbereich 3 auf dem Substrat 1 aufweisen.

Erfassen das Spektralphotometer 7 und der bildgebende Sensor 4 gleichzeitig das Druckbild 2 oder einen Ausschnitt davon, so ist der erste Erfassungsbereich 3-1 auf dem Substrat 1 identisch mit dem zweiten Erfassungsbereich 3-2 auf dem Substrat 1. Erfasst hingegen das Spektralphotometer 7 das Substrat 1 zeitlich versetzt zum bildgebenden Sensor 4, so erfasst bei einem mit der Substratgeschwindigkeit v bewegten Substrat 1 das Spektralphotometer 7 einen ersten Erfassungsbereich 3-1, der auf dem Substrat 1 eine andere geometrische Position aufweist, als der vom bildgebenden Sensor 4 erfasste zweite Erfassungsbereich 3-2.

Wenngleich in Fig. 1 das Spektralphotometer 7 als auch der bildgebende Sensor 4 in einer Erfassungsvorrichtung 8 unter einem nicht näher gezeigten Gehäuse angeordnet sind, so ist diese Konfiguration nicht zwingend, da das Spektralphotometer 7 als auch der bildgebende Sensor 4 ohne eine gemeinsame Vorrichtung dennoch derartig zueinander ausgerichtet sein können.

Wenngleich in Fig. 1 keine Beleuchtungsvorrichtung dargestellt ist, mit welcher das Substrat 1 entweder getaktet oder dauerhaft beleuchtet wird, so kann eine derartige Beleuchtungsvorrichtung entweder in der Erfassungsvorrichtung 8 integriert sein, oder geometrisch unabhängig hierzu angeordnet sein.

Fig. 2 zeigt eine abweichende Konfiguration einer Erfassungsvorrichtung 8 als in Fig. 1 dargestellt, wenngleich die hierbei eingesetzten Komponenten dieselben sind.

Fig. 2 zeigt eine zweite beispielhafte Anordnung eines Spektralphotometers 7 zu einem bildgebenden Sensor 4. Sowohl das Spektralphotometer 7 als auch der bildgebende Sensor 4 weisen jeweils einen Erfassungsbereich 3 auf, welcher senkrecht auf das Substrat 1 gerichtet ist. Aufgrund des Abstandes zwischen dem Spektralphotometer 7 und dem bildgebenden Sensor 4 weist somit das Spektralphotometer 7 einen ersten Erfassungsbereich 3-1 auf, welcher um die Positionsdifferenz yd zum zweiten Erfassungsbereich 3-2 des bildgebenden Sensors 4 beabstandet ist. Wenngleich in Fig. 2 nicht dargestellt, so ist es auch möglich, dass der zweite Erfassungsbereich 3-2 zusätzlich in Richtung und/oder alternativ senkrecht zur Substratgeschwindigkeit v mit einer Positionsdifferenz xd von dem ersten Erfassungsbereich 3-1 beabstandet ist.

Besteht zwischen dem ersten Erfassungsbereich 3-1 und dem zweiten Erfassungsbereich 3-2 lediglich ein Versatz yd in Richtung der Substratgeschwindigkeit v, so kann auf dem Substrat 1 der erste Erfassungsbereich 3-1 mit dem zweiten Erfassungsbereich 3-2 identisch sein, wenn das Spektralphotometer 7 zeitlich versetzt zum bildgebenden Sensor 4 ausgelöst wird.

Wird jedoch das Spektralphotometer 7 zeitgleich zum bildgebenden Sensor 4 ausgelöst, so ist der erste Erfassungsbereich 3-1 geometrisch auf dem Substrat 1 nicht identisch mit dem zweiten Erfassungsbereich 3-2.

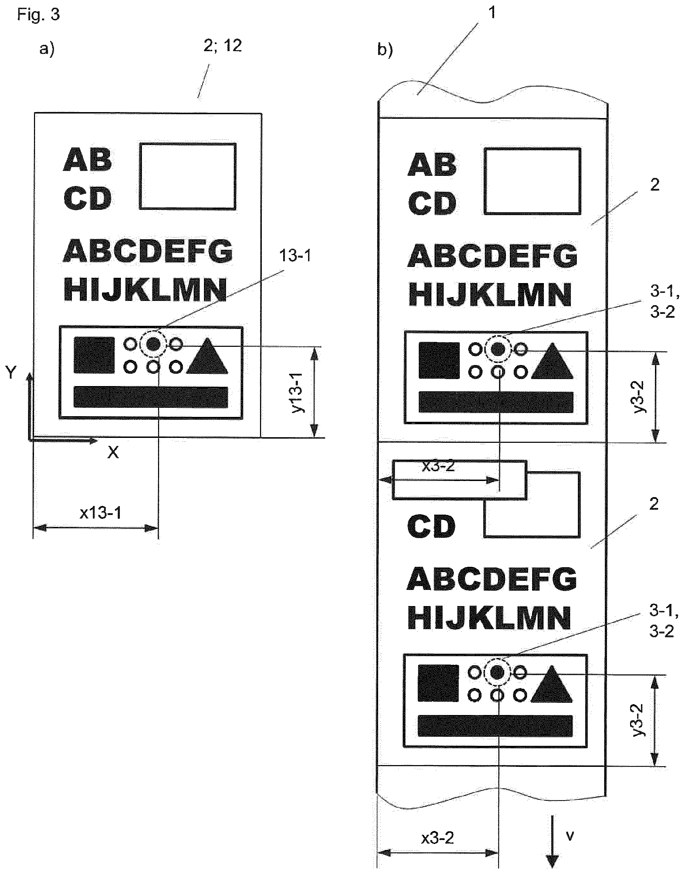

Fig. 3 zeigt in Fig. 3a) ein beispielhaftes, anhand von Bilddaten 12 definiertes Druckbild 2 sowie in Fig. 3b) das entsprechende Druckbild 2, welches sequentiell hintereinander auf ein bahnförmiges Substrat 1 aufgedruckt ist.

Das in Fig. 3a) beispielhaft dargestellte Druckbild 2 stellt das zu druckende Sujet dar, welches anhand von in der Regel digitalen Bilddaten 12 abbildbar ist beziehungsweise hierdurch definiert ist. Die Bilddaten 12 können entweder aus einer digitalen Druckvorstufe stammen, in welcher das zu druckende Sujet festgelegt wird. Es ist aber auch möglich, die Bilddaten 12 mittels eines Druckinspektionssystems zu ermitteln, mit welcher das Substrat 1 entweder vollflächig abfotografiert wird, oder aber sequentiell abgetastet wird, so dass auch von einem Druckinspektionssystem als Ergebnis digitale Bilddaten 12 in der Gänze des Druckbildes 2 vorhanden sind, welche das Druckbild 2 abbilden.

Fig. 3a) bildet das Druckbild 2 und somit das zu druckende Sujet ab, welches anhand von digitalen Bilddaten 12 vorgegeben oder abgebildet wird. Um eine Lage für den Zielbereich 13-1 festlegen zu können, ist in Fig. 3a beispielhaft ein Koordinatensystem dargestellt, so dass die Lage des ersten Zielbereiches 13-1 beispielsweise anhand von Koordinaten definiert werden kann. Es ist jedoch auch möglich, die Lage und somit die Position anhand von Bilddaten 12, anhand von Pixeln oder beispielsweise anhand des Rasters der Bilddaten 12 zu definieren. In den nachfolgenden Beispielen werden die Positionen jedoch beispielhaft ausschließlich anhand des Koordinatensystems definiert, welches seinen Ursprung an der unteren linken Ecke des Druckbildes 2 hat.

Fig. 3b) hingegen bildet sinnbildlich das auf das Substrat 1 aufgedruckte Druckbild 2 ab. Fig. 3b) zeigt beispielhaft eine Draufsicht auf ein bahnförmiges Substrat 1, das mit der Substratgeschwindigkeit v durch eine Druckmaschine oder eine Weiterverarbeitungsvorrichtung gefördert wird.

Gemäß der vorliegenden Erfindung wird in dem als Bilddaten 12 vorliegenden Druckbild 2 oder direkt in den Bilddaten 12 mindestens ein Zielbereich 13 festgelegt, bezogen auf das Beispiel gemäß Fig. 3a) wird ein einziger erster Zielbereich 13-1 in den Bilddaten 12 definiert. Dieser erste Zielbereich 13-1 besitzt die Position x13-1,y13-1 und umfasst den beispielhaft dargestellten ausgefüllten Punkt im unteren Drittel des Druckbildes 2. Dieser Punkt kann eine Druckmarke zur Erfassung der Marke sein, vorzugsweise liegt jedoch der Zielbereich 13-1 in einem beliebigen Bereich des Druckbildes 2, um den zusätzlichen Platzbedarf für Druckmarken oder Druckkontrollstreifen zu vermeiden.

Dieser Zielbereich 13-1 wird in einer Druckmaschine oder beispielsweise in einer Nachverarbeitungseinrichtung und somit auch außerhalb einer Druckmaschine durch die in Fig. 3b) nicht dargestellte Erfassungsvorrichtung 8 erfasst, wobei eine Positionierung und/oder Aktivierung des Spektralphotometers 7 und des bildgebenden Sensors 4 anhand der Bilddaten 12 oder beispielsweise anhand von Daten der Antriebssteuerung oder anhand von Geberdaten der Druckzylinder etc. erfolgen kann.

Der dem Zielbereich 13-1 entsprechende Bildbereich wird von dem Spektralphotometer 7 und dem ihm zugehörigen ersten Erfassungsbereich 3-1 erfasst, wobei das Spektralphotometer 7 die Ist-Spektraldaten von dem ersten Erfassungsbereich 3-1 ermittelt.

Zeitgleich (beispielsweise mit einer Konfiguration gemäß Fig. 1) oder zeitlich versetzt (beispielsweise mit einer Konfiguration gemäß Fig. 2) wird der dem Zielbereich 13-1 entsprechende Bildausschnitt von dem bildgebenden Sensor 4 und dem ihm zugehörigen zweiten Erfassungsbereich 3-2 erfasst. Der bildgebende Sensor 4 ermittelt hierbei die Ist-Bilddaten des zweiten Erfassungsbereiches 3-2.

Die von dem bildgebenden Sensor 4 erfassten Ist-Bilddaten werden entweder durch den bildgebenden Sensor 4 selbst, durch eine dem bildgebenden Sensor 4 zugehörige Recheneinrichtung oder durch eine sonstige nicht in Fig. 3 dargestellte Recheneinrichtung mit den Bilddaten 12 verglichen, so dass anhand dieses Abgleiches die Position x3-2,y3-2 des zweiten Erfassungsbereiches 3-2 im Druckbild 2 bestimmt werden kann.

Aufgrund der bekannten und definierten Positionsdifferenz xd,yd des ersten Erfassungsbereiches 3-1 zum zweiten Erfassungsbereich 3-2 (im Beispiel gemäß Fig. 1 ist die Positionsdifferenz gleich 0, im Beispiel gemäß Fig. 2 ist die Positionsdifferenz yd) kann anhand der ermittelten Position x3-2,y3-2 des zweiten Erfassungsbereiches 3-2 die exakte Position x3-1,y3-1 des ersten Erfassungsbereiches 3-1 im Druckbild 2 bestimmt werden, indem beispielsweise zu den Koordinaten der Position x3-1,y3-1 des ersten Erfassungsbereiches 3-1 die Positionsdifferenz xd,yd addiert oder subtrahiert wird.

Gemäß dem in Fig. 3b) dargestellten Beispiel stimmt die Position x3-1,y3-1 des ersten Erfassungsbereiches 3-1 mit der Position x3-2,y3-2 des zweiten Erfassungsbereiches 3-2 überein, was an den deckungsgleichen Erfassungsbereichen 3 ersichtlich ist, so dass bei dem in Fig. 3b) dargestellten Beispiel sichergestellt werden kann, dass die Ist-Spektraldaten tatsächlich von dem Bereich erfasst wurden, welcher als Zielbereich 13-1 definiert wurde.

Zur exakten Ermittlung des ersten Erfassungsbereiches 3-1 ist somit eine exakte Kalibrierung des ersten Erfassungsbereiches 3-1 zum zweiten Erfassungsbereich 3-2 und somit des Spektralphotometers 7 zum bildgebenden Sensor 4 erforderlich, was aber beispielsweise durch exakte Ausrichtung des Spektralphotometers 7 zum bildgebenden Sensor 4 und/oder Ausrichtung der zugehörigen Optiken mit einfachen Mitteln möglich ist.

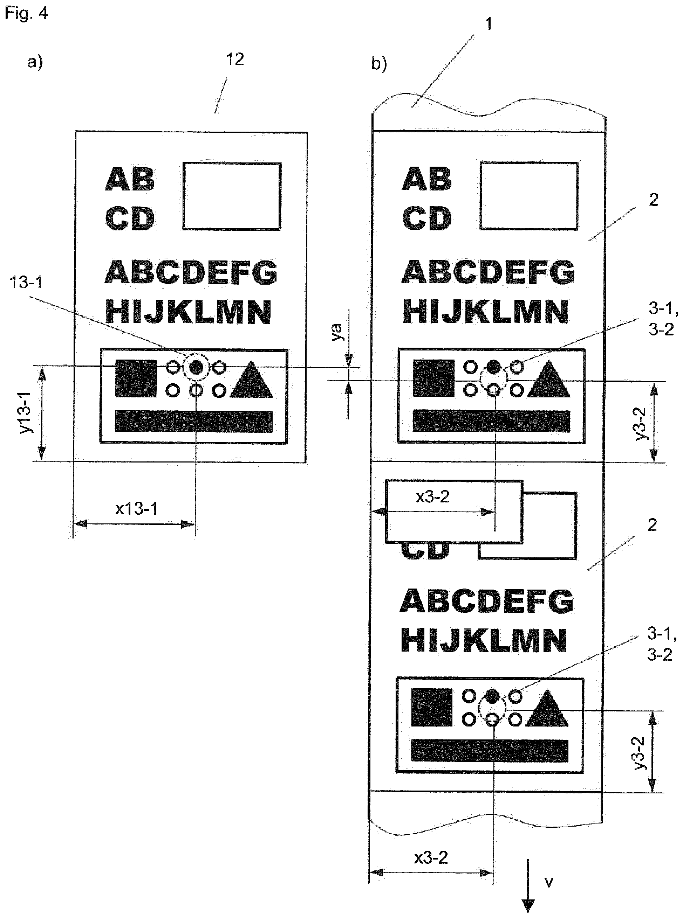

Fig. 4a) zeigt dieselbe Festlegung eines ersten Zielbereiches 13-1 in dem Druckbild 2 wie unter Fig. 3a) beschrieben, weshalb an dieser Stelle auf eine Wiederholung bezüglich der Festlegung des beispielhaften einen ersten Zielbereiches 13-1 verzichtet und stattdessen auf die Beschreibung der Fig. 3a) verwiesen wird.

Fig. 4b) zeigt wie Fig. 3b) einen Ausschnitt des bedruckten und mit der Substratgeschwindigkeit v bewegten Substrats 1, so dass hinsichtlich dem Zusammenhang zwischen der Fig. 4b) zu Fig. 4a) auf die entsprechende Stelle der Beschreibung zu Fig. 3 verwiesen wird.

Zusammengefasst kann zu Fig. 4 festgehalten werden, dass in dem Druckbild 2 und/oder in den Bilddaten 12 ein erster Zielbereich 13-1 zur Bestimmung der Farbgebung mit der Position x13-1,y13-1 festgelegt wurde.

Dieser erste Zielbereich 13-1 wird in einer Druckmaschine oder in einer Nachverarbeitungseinrichtung durch die in Fig. 4b) nicht dargestellte Erfassungsvorrichtung 8 erfasst, wobei eine Positionierung und/oder Aktivierung des Spektralphotometers 7 und des bildgebenden Sensors 4 anhand der Bilddaten 12 oder beispielsweise anhand von Daten der Antriebssteuerung oder anhand von Geberdaten der Druckzylinder etc. erfolgen kann.

Der dem ersten Zielbereich 13-1 entsprechende Bildbereich wird von dem Spektralphotometer 7 und dem ihm zugehörigen ersten Erfassungsbereich 3-1 beispielsweise anhand von Daten der Antriebssteuerung, anhand von Geberdaten der Druckmaschine etc. versucht zu erfassen, wobei das Spektralphotometer 7 die Ist-Spektraldaten von dem tatsächlich erfassten ersten Erfassungsbereich 3-1 ermittelt.

Zeitgleich (beispielsweise mit einer Konfiguration gemäß Fig. 1) oder zeitlich versetzt (beispielsweise mit einer Konfiguration gemäß Fig. 2) wird der dem ersten Zielbereich 13-1 entsprechende Bildausschnitt von dem bildgebenden Sensor 4 und dem ihm zugehörigen zweiten Erfassungsbereich 3-2 ebenfalls anhand von Daten der Antriebssteuerung oder anhand von Geberdaten der Druckmaschine etc. versucht zu erfassen. Der bildgebende Sensor 4 ermittelt hierbei die Ist-Bilddaten des tatsächlich erfassten zweiten Erfassungsbereiches 3-2.

Die von dem bildgebenden Sensor 4 erfassten Ist-Bilddaten des tatsächlich erfassten zweiten Erfassungsbereiches 3-2 werden entweder durch den bildgebenden Sensor 4 selbst, durch eine dem bildgebenden Sensor 4 zugehörige Recheneinrichtung oder durch eine sonstige nicht in Fig. 4 dargestellte Recheneinrichtung mit den Bilddaten 12 verglichen, so dass anhand dieses Abgleiches die Position x3-2,y3-2 des zweiten Erfassungsbereiches 3-2 im Druckbild 2 bestimmt werden kann.

Aufgrund der bekannten und definierten Positionsdifferenz xd,yd des ersten Erfassungsbereiches 3-1 zum zweiten Erfassungsbereich 3-2 (im Beispiel gemäß Fig. 1 ist die Positionsdifferenz gleich 0, im Beispiel gemäß Fig. 2 ist die Positionsdifferenz yd) kann anhand der ermittelten Position x3-2,y3-2 des zweiten Erfassungsbereiches 3-2 die exakte Position x3-1,y3-1 des ersten Erfassungsbereiches 3-1 im Druckbild 2 bestimmt werden, indem beispielsweise zu den Koordinaten der Position x3-1,y3-1 des ersten Erfassungsbereiches 3-1 die Positionsdifferenz xd,yd addiert oder subtrahiert wird.

Gemäß dem in Fig. 4b) dargestellten Beispiel stimmt die Position x3-1,y3-1 des ersten Erfassungsbereiches 3-1 mit der Position x3-2,y3-2 des zweiten Erfassungsbereiches 3-2 überein, was an den deckungsgleichen Erfassungsbereichen 3 ersichtlich ist. Allerdings ist in Fig. 4b) ein beispielhafter Fall dargestellt, bei welchem die Position x3-2,y3-2 des zweiten Erfassungsbereiches 3-2 und somit die Position x3-1,y3-1 des ersten Erfassungsbereiches 3-1 von der Position x13-1,y13-1 des ersten Zielbereiches 13-1 abweicht, was an einer geometrisch anderen Lage des ersten Erfassungsbereiches 3-1 und somit auch des zweiten Erfassungsbereiches 3-2 im Druckbild 2 im Vergleich zum ersten Zielbereich 13-1 zu erkennen ist.

Eine derartige geometrische Abweichung des ersten Erfassungsbereiches 3-1 zum ersten Zielbereich 13-1 kann beispielsweise in einer Längung oder einer Dehnung oder einem Auswachsen des Substrates 1, durch Schlupf des Substrates 1, durch seitlichen Verlauf oder Versatz des Substrates 1 zur vorgesehenen Position oder aus ähnlichen Gründen begründet sein.

Wenngleich in Fig. 4b) beispielhaft nur eine Abweichung der Position x3-1,y3-1 des ersten Erfassungsbereiches 3-1 und der Position x3-2,y3-2 des zweiten Erfassungsbereiches 3-2 zum ersten Zielbereich 13-1 in Erstreckung der Substratgeschwindigkeit v dargestellt ist, so ist es auch möglich, dass die Abweichung der Position x3-1,y3-1 des ersten Erfassungsbereiches 3-1 und der Position x3-2,y3-2 des zweiten Erfassungsbereiches 3-2 senkrecht zur Substratgeschwindigkeit v oder senkrecht zur und in Erstreckung der Substratgeschwindigkeit v erfolgt.

Da gemäß Fig. 4b) das Spektralphotometer 7 einen vom ersten Zielbereich 13-1 merklich abweichenden ersten Erfassungsbereich 3-1 erfasst hat, und da somit das Spektralphotometer 7 somit einen anderen Ausschnitt aus dem Druckbild 2 erfasst hat als vorgesehen, wäre es ein Sujet-bedingter Zufall, wenn die tatsächlich vom ersten Erfassungsbereich 3-1 ermittelten Ist-Spektraldaten mit den Soll-Spektraldaten übereinstimmen würden, da ein anderer Teil des Druckbildes 2 erfasst und hiervon die Ist-Spektraldaten ermittelt wurden, als vorgesehen.

Überschreitet die Positionsabweichung xa,ya zwischen der Position x13-1,y13-1 des ersten Zielbereiches 13-1 und der Position x3-1,y3-1 des ersten Erfassungsbereiches 3-1 einen bestimmen Grenzwert, welcher beispielsweise in Abhängigkeit der Bilddaten 12 und dem Aufbau des Sujets und/oder in Abhängigkeit der Richtung der Positionsabweichung xa,ya festgelegt werden kann, so werden die vom ersten Erfassungsbereich 3-1 erfassten Ist-Spektraldaten als ungültig deklariert und finden keine Anwendung in statistischen Qualitätsauswertungen oder in der Anpassung von Einstellungen der Farbgebung, da die Abweichung der erfassten Ist-Spektraldaten von den für den ersten Zielbereich 13-1 vorgegebenen Soll-Spektraldaten mit hoher Wahrscheinlichkeit in der Erfassung eines anderen Bildausschnittes begründet ist.

Ferner ist es möglich, anhand der Position x3-1,y3-1 des ersten Erfassungsbereiches 3-1 aus den Bilddaten 12 farbmetrische Solldaten und/oder spektrale Solldaten für den ersten Erfassungsbereich 3-1 berechnet werden. Insbesondere bei einer systematischen Abweichung des ersten Erfassungsbereiches 3-1 vom ersten Zielbereich 13-1 und einer über einen Druckauftrag im Wesentlichen gleichbleibenden Positionsabweichung xa,ya ist es sinnvoll, für den tatsächlich erfassten ersten Erfassungsbereich 3-1 die Soll-Spektraldaten und/oder die farbmetrischen Solldaten und/oder die spektralen Solldaten zu ermitteln, um trotz der Positionsabweichung xa,ya eine Qualitätsüberwachung durchführen zu können.

Für eine derartige Qualitätsüberwachung werden die Ist-Spektraldaten des ersten Erfassungsbereiches 3-1 mit den spektralen Solldaten und/oder den farbmetrischen Solldaten verglichen, wobei die spektralen Solldaten und/oder die farbmetrischen Solldaten im Falle keiner oder nur einer geringen Positionsabweichung xa,ya zwischen dem ersten Erfassungsbereich 3-1 und dem ersten Zielbereich 13-1 herangezogen werden können oder wobei die spektralen Solldaten und/oder die farbmetrischen Solldaten im Falle einer entsprechend signifikanten Positionsabweichung xa,ya zwischen dem ersten Erfassungsbereich 3-1 und dem ersten Zielbereich 13-1 von dem tatsächlich erfassten ersten Erfassungsbereich 3-1 herangezogen werden können. Für den Vergleich sind die Ist-Spektraldaten gegebenenfalls in farbmetrische Daten nach den aus dem Stand der Technik bekannten Vorgehensweisen umzurechnen.

Erfolgt der oben beschriebene Vergleich zwischen den Ist-Spektraldaten und den spektralen Solldaten und/oder den farbmetrischen Solldaten und wird hierbei eine vorgegebene Differenz überschritten, so können weitere Schritte oder mindestens ein weiterer Schritt eingeleitet werden.

Ein derartiger Schritt kann beispielsweise die Protokollierung von Farbabweichungen in einem Produktionsrapport oder Qualitätsbericht und/oder die Korrektur der zur Farbgebung erforderlichen Einstellungen sein, wie beispielsweise das Öffnen oder Schließen von Farbzonen für eine oder mehrere verdruckte Farben im Falle einer Offsetdruckmaschine. Als ein einzuleitender Schritt kann aber auch die Makulaturweiche geöffnet werden, so dass die Druckprodukte mit zu stark abweichender Farbgebung als Makulatur ausgeschleust werden und nicht einer weiteren Verarbeitung oder dem Verkauf zugeführt werden.

Wie in den Figuren 3 und 4 dargestellt, so ist es vorteilhaft, die Schritte des Erfassens eines ersten Erfassungsbereiches 3-1 mit dem Spektralphotometer 7 und die Bestimmung der Ist-Spektralwerte, das Erfassen des zweiten Erfassungsbereiches 3-2 mit dem bildgebenden Sensor 4 und die Ermittlung der Position des zweiten Erfassungsbereiches 3-2 wie oben beschrieben, nicht nur für ein auf ein Substrat 1 aufgedrucktes Druckbild 2, sondern für eine Vielzahl von Druckbildern 2, vorzugsweise für alle auf das Substrat 1 aufgedruckten Druckbilder 2 durchzuführen, um somit auch die oben beschriebenen optional nachfolgenden Schritte für jedes Druckbild 2 ausführen zu können.

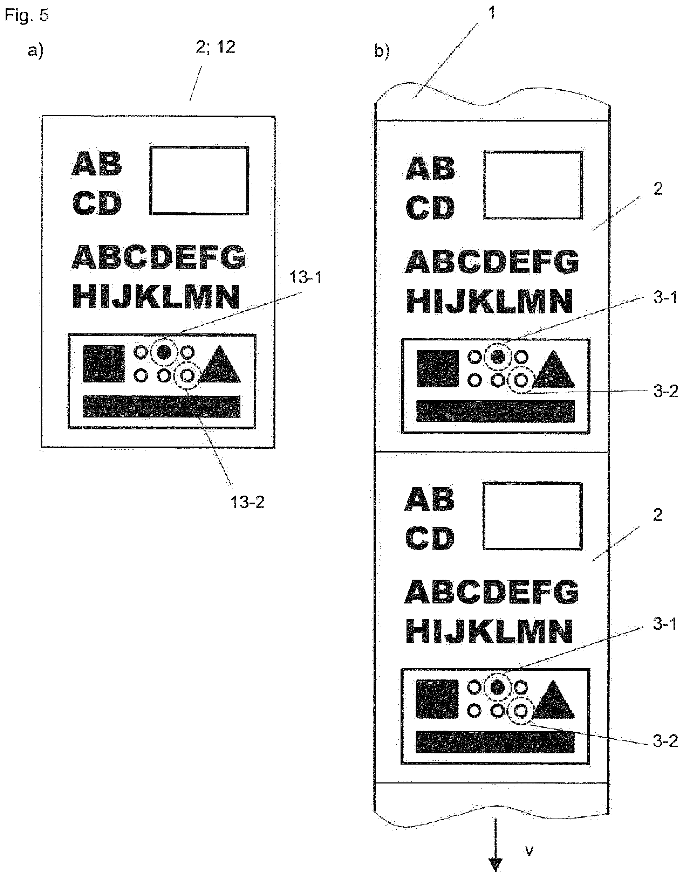

Fig. 5 zeigt in Fig. 5a) im Wesentlichen dasselbe beispielhafte Druckbild 2 wie in den Figuren 3a) und 4a) dargestellt und beschrieben, und zeigt in Fig. 5b) ein mit dem sich wiederholenden Druckbild 2 bedrucktes Substrat 1 am Beispiel eines bahnförmigen Substrates 1 wie unter den Figuren 3b) und 4b) dargestellt und beschrieben.

Fig. 5a) zeigt jedoch eine zu den Figuren 3a) und 4a) abweichende Ausgestaltung, nämlich, dass in dem Druckbild 2 und/oder in den zugehörigen Bilddaten 12 nicht nur ein erster Zielbereich 13-1 definiert ist, welcher von dem Spektralphotometer 7 und dem bildgebenden Sensor 4 erfasst werden soll, sondern Fig. 5a) zeigt eine Ausgestaltung, bei welcher ein erster Zielbereich 13-1 und ein zweiter Zielbereich 13-2 festgelegt wurden.

Der erste Zielbereich 13-1 ist hierbei derjenige Zielbereich 13, welcher von dem Spektralphotometer 7 erfasst werden soll, während der zweite Zielbereich 13-2 der Zielbereich 13 ist, der von dem bildgebenden Sensor 4 erfasst werden soll.

Eine Trennung des ersten Zielbereiches 13-1 vom zweiten Zielbereich 13-2 ist insbesondere dann von Vorteil, wenn der erste Zielbereich 13-1 aufgrund der Farbgebung und/oder der geometrischen Ausdehnung für die Erfassung der Ist-Spektraldaten prädestiniert ist, aber sich mit dem ersten Zielbereich 13-1 die exakte Position x3-2,y3-2 des zweiten Erfassungsbereiches 3-2 nur aufwendig oder ungenau bestimmen lässt, beispielsweise wenn der erste Zielbereich 13-1 in einer größeren homogenen Fläche liegt.

Das erfindungsgemäße Verfahren erfolgt dann prinzipiell wie unter den Fig. 3 und 4 beschrieben, jedoch mit folgenden Besonderheiten:
Gemäß dieser Ausgestaltung wird in dem als Bilddaten 12 vorliegenden Druckbild 2 oder direkt in den Bilddaten 12 mindestens ein erster Zielbereich 13-1 und mindestens ein zweiter Zielbereich 13-2 festgelegt. Dieser erste Zielbereich 13-1 besitzt die Position x13-1,y13-1 und umfasst den beispielhaft dargestellten ausgefüllten Punkt im unteren Drittel des Druckbildes 2. Dieser Punkt kann eine Druckmarke zur Erfassung der Marke sein, vorzugsweise liegt jedoch der erste Zielbereich 13-1 in einem beliebigen Bereich des Druckbildes 2, um den zusätzlichen Platzbedarf für Druckmarken oder Druckkontrollstreifen zu vermeiden. Der zweite Zielbereich 13-2 besitzt die Position x13-2,y13-2 und umfasst den beispielhaft nicht ausgefüllten Kreis. Dieser Kreis kann eine Druckmarke zur Erfassung der Marke sein, vorzugsweise liegt jedoch der zweite Zielbereich 13-2 in einem beliebigen Bereich des Druckbildes 2, um den zusätzlichen Platzbedarf für Druckmarken oder Druckkontrollstreifen zu vermeiden.

Der erste Zielbereich 13-1 wird in einer Druckmaschine oder in einer Nachverarbeitungseinrichtung durch den in Fig. 5b) nicht dargestellten Spektralphotometer 7 versucht zu erfassen. Der dem ersten Zielbereich 13-1 entsprechende Bildbereich wird von dem Spektralphotometer 7 und dem ihm zugehörigen ersten Erfassungsbereich 3-1 erfasst, wobei das Spektralphotometer 7 die Ist-Spektraldaten von dem ersten Erfassungsbereich 3-1 ermittelt.

Zeitgleich oder zeitlich versetzt (abhängig von der geometrischen Zuordnung des Spektralphotometers 7 zum bildgebenden Sensor 4 sowie abhängig von der geometrischen Abweichung des ersten Zielbereiches 13-1 vom zweiten Zielbereich 13-2) wird der dem zweiten Zielbereich 13-2 entsprechende Bildausschnitt von dem bildgebenden Sensor 4 und dem ihm zugehörigen zweiten Erfassungsbereich 3-2 erfasst. Der bildgebende Sensor 4 ermittelt hierbei die Ist-Bilddaten des zweiten Erfassungsbereiches 3-2.

Die von dem bildgebenden Sensor 4 erfassten Ist-Bilddaten werden entweder durch den bildgebenden Sensor 4 selbst, durch eine dem bildgebenden Sensor 4 zugehörige Recheneinrichtung oder durch eine sonstige nicht in Fig. 5 dargestellte Recheneinrichtung mit den Bilddaten 12 verglichen, so dass anhand dieses Abgleiches die Position x3-2,y3-2 des zweiten Erfassungsbereiches 3-2 im Druckbild 2 bestimmt werden kann.

Aufgrund der bekannten und definierten Positionsdifferenz xd,yd des ersten Erfassungsbereiches 3-1 zum zweiten Erfassungsbereich 3-2 kann anhand der ermittelten Position x3-2,y3-2 des zweiten Erfassungsbereiches 3-2 sowie anhand des bekannten Abstandes beispielsweise durch eine zeitlich versetzte Erfassung des ersten Erfassungsbereiches 3-1 zum zweiten Erfassungsbereich 3-2 bei bekannter Substratgeschwindigkeit v die exakte Position x3-1,y3-1 des ersten Erfassungsbereiches 3-1 im Druckbild 2 bestimmt werden, indem beispielsweise zu den Koordinaten der Position x3-1,y3-1 des ersten Erfassungsbereiches 3-1 die Positionsdifferenz xd,yd und im Bedarfsfalle die durch den Zeitversatz zurückgelegte Distanz des Substrates 1 addiert oder subtrahiert wird.

Wenngleich nicht in den Figuren 3, 4 oder 5 dargestellt, so ist es auch möglich, in das Druckbild 2 oder in die Bilddaten 12 eine Mehrzahl von ersten Zielbereichen 13-1 oder eine Mehrzahl von ersten Zielbereichen 13-1 und zweiten Zielbereichen 13-2 festzulegen und die Mehrzahl der den ersten Zielbereichen 13-1 entsprechenden ersten Erfassungsbereichen 3-1 durch das Spektralphotometer 7 zu erfassen und die jeweils zugehörigen Ist-Spektraldaten zu erfassen, sowie die Mehrzahl der den ersten Zielbereichen 13-1 oder im Falle der Festlegung einer Mehrzahl von zweiten Zielbereichen 13-2 den zweiten Zielbereichen 13-2 entsprechenden zweiten Erfassungsbereichen 3-2 mit dem bildgebenden Sensor 4 zur erfassen, so dass für alle zweiten Erfassungsbereiche 3-2 anhand des Abgleiches mit den Bilddaten 12 die jeweilige Position x3-2,y3-2 eines jeden zweiten Erfassungsbereiches 3-2 bestimmt werden kann, und dass aus jeder Position x3-2,y3-2 der Mehrzahl der zweiten Erfassungsbereiche 3-2 für jeden zugehörigen ersten Erfassungsbereich 3-1 die jeweilige Position x3-1,y3-1 ermittelt wird.

Auch ist es möglich, alle optionalen nachfolgenden Schritte wie oben ausgeführt, für die Mehrzahl der ersten Erfassungsbereiche 3-1 und für die Mehrzahl der zweiten Erfassungsbereiche 3-2 durchzuführen.

### Bezugszeichenliste

- 1: Substrat
- 2: Druckbild
- 3: Erfassungsbereich
- 4: bildgebender Sensor

- 7: Spektralphotometer
- 8: Erfassungsvorrichtung

- 12: Bilddaten
- 13: Zielbereich

- v: Substratgeschwindigkeit
- x,y: Position
- xd,yd: Positionsdifferenz
- xa,ya: Positionsabweichung

## Patentansprüche

1. Verfahren zur Evaluierung von Spektraldaten eines auf ein Substrat (1) aufgebrachten Druckbildes (2), wobei das Druckbild (2) mittels digitaler Bilddaten (12) abgebildet wird, umfassend die folgenden Verfahrensschritte:
a) Festlegen mindestens eines in dem auf das Substrat (1) aufgedruckten Druckbild (2) liegenden Zielbereiches (13), nämlich entweder Festlegung eines ersten Zielbereiches (13-1) mit einer Position (x13-1,y13-1) oder Festlegung eines ersten Zielbereiches (13-1) mit der Position (x13-1,y13-1) und eines zweiten Zielbereiches (13-2) mit der Position (x13-2,y13-2),
b) Erfassen eines in dem auf das Substrat (1) aufgedruckten Druckbild (2) liegenden, dem ersten Zielbereich (13-1) entsprechenden ersten Erfassungsbereiches (3-1) mittels eines Spektralphotometers (7) und Ermittlung von Ist-Spektraldaten des ersten Erfassungsbereiches (3-1),
c) Zeitgleiches oder zeitlich versetztes Erfassen eines in dem auf das Substrat (1) aufgedruckte Druckbild (2) liegenden ersten Zielbereiches (13-1) entsprechenden zweiten Erfassungsbereiches (3-2) oder im Falle der Bestimmung des zweiten Zielbereiches (13-2) zeitgleiches oder zeitlich versetztes Erfassen eines in dem Druckbild (2) liegenden, dem zweiten Zielbereich (13-2) entsprechenden zweiten Erfassungsbereich (3-2) mittels eines bildgebenden Sensors (4) und Ermittlung von Ist-Bilddaten des zweiten Erfassungsbereiches (3-2),
d) Vergleichen der durch den bildgebenden Sensor (4) erfassten Ist-Bilddaten mit den digitalen Bilddaten (12) und Bestimmung der Position (x3-2,y3-2) des zweiten Erfassungsbereiches (3-2) im auf das Substrat (1) aufgedrukten Druckbild (2),
e) Bestimmung der Position x3-1,y3-1 des ersten Erfassungsbereiches (3-1) im auf das Substrat (1) aufgedruckten Druckbild (2) anhand der Position (x3-2,y3-2) des zweiten Erfassungsbereiches (3-2) im Druckbild (2) sowie einer definierten Positionsdifferenz (xd,yd) des ersten Erfassungsbereiches (3-1) zum zweiten Erfassungsbereich (3-2), **dadurch gekennzeichnet, dass** bei Überschreiten eines Grenzwertes einer Positionsabweichung (xa,ya) zwischen der Position (13-1,y13-1) des ersten Zielbereiches (13-1) und der Position (x3-1,y3-1) des ersten Erfassungsbereiches (3-1) die Ist-Spektraldaten als ungültig verworfen werden.

2. Verfahren nach Anspruch 1, **dadurch gekennzeichnet, dass** die Verfahrensschritte b) bis e) für mindestens ein auf das Substrat (1) aufgedruckten nachfolgendes Druckbild (2) wiederholt werden.

3. Verfahren nach einem der Ansprüche 1 bis 2, **dadurch gekennzeichnet, dass** im Verfahrensschritt a) eine Mehrzahl von ersten Zielbereichen (13-1) oder eine Mehrzahl von ersten Zielbereichen (13-1) und eine Mehrzahl von zweiten Zielbereichen (13-2) festgelegt werden, und dass die Verfahrensschritte b) bis e) für die Mehrzahl der Zielbereiche (13) und den jeweils zugehörigen Erfassungsbereichen (3) durchgeführt werden.

4. Verfahren nach einem der Ansprüche 1 und 3, **dadurch gekennzeichnet, dass** als bildgebender Sensor (4) eine CCD-Kamera oder eine CMOS-Kamera verwendet wird.

5. Verfahren nach einem der Ansprüche 1 bis 4, **dadurch gekennzeichnet, dass** die Verfahrensschritte innerhalb oder außerhalb einer Druckmaschine und/oder zeitgleich oder zeitversetzt zur Herstellung eines Druckproduktes ausgeführt werden.

## Claims

1. A method for evaluating spectral data of a printed image (2) applied to a substrate (1), wherein the printed image (2) is represented by digital image data (12), comprising the following steps:
a) Defining of at least one target area (13) located within the printed image (2) printed onto the substrate (1), namely either defining a first target area (13-1) with a position (x13-1, y13-1) or defining a first target area (13-1) with the position (x13-1, y13-1) and a second target area (13-2) with the position (x13-2, y13-2),
b) Detecting a first detection area (3-1) corresponding to the first target area (13-1) and located within the printed image (2) on the substrate (1) by means of a spectrophotometer (7), and determining actual spectral data of the first detection area (3-1),
c) Simultaneous or time-delayed detection of a second detection area (3-2) corresponding to a first target area (13-1) located within the printed image (2) on the substrate (1), or, in the case of determining the second target area (13-2), simultaneous or time-delayed detection of a second detection area (3-2) corresponding to the second target area (13-2) positioned within the printed image (2) by means of an imaging sensor (4), and determination of actual image data for the second detection area (3-2),
d) Comparing the actual image data captured by the imaging sensor (4) with the digital image data (12) and determining the position (x3-2,y3-2) of the second detection area (3-2) in the printed image (2) printed onto the substrate (1),
e) Determining the position x3-1,y3-1 of the first detection area (3-1) in the printed image (2) on the substrate (1) on the basis of the position (x3-2,y3-2) of the second detection area (3-2) in the printed image (2) and a defined positional difference (xd,yd) of the first detection area (3-1) relative to the second detection area (3-2), **characterised in that**, if a threshold value for a positional deviation (xa,ya) between the position (x13-1,y13-1) of the first target area (13-1) and the position (x3-1,y3-1) of the first detection area (3-1) is exceeded, the actual spectral data are discarded as invalid.

2. The method according to claim 1, **characterised in that** process steps b) to e) are repeated for at least one subsequent print image (2) printed onto the substrate (1).

3. A method according to any one of claims 1 to 2, **characterised in that,** in process step a), a plurality of first target areas (13-1) or a plurality of first target areas (13-1) and a plurality of second target areas (13-2) are defined, and that process steps b) to e) are carried out for the plurality of target areas (13) and the respective associated detection areas (3).

4. A method according to any one of claims 1 and 3, **characterised in that** a CCD camera or a CMOS camera is used as the imaging sensor (4).

5. A method according to any one of claims 1 to 4, **characterised in that** the method steps are carried out inside or outside a printing machine and/or simultaneously or at a later time with respect to the production of a printed product.

## Revendications

1. Procédé d'évaluation de données spectrales d'une image imprimée (2) appliquée sur un substrat (1), l'image imprimée (2) étant représentée au moyen de données d'image numériques (12), comprenant les étapes suivantes:
a) Définition d'au moins une zone cible (13) située dans l'image imprimée (2) sur le substrat (1), à savoir soit la définition d'une première zone cible (13-1) avec une position (x13-1, y13-1), soit la définition d'une première zone cible (13-1) avec la position (x13-1, y13-1) et d'une deuxième zone cible (13-2) avec la position (x13-2, y13-2),
b) Détection, à l'aide d'un spectrophotomètre (7), d'une première zone de détection (3-1) située dans l'image imprimée (2) sur le substrat (1) et correspondant à la première zone cible (13-1), et détermination des données spectrales réelles de la première zone de détection (3-1),
c) Détection simultanée ou différée d'une deuxième zone de détection (3-2) correspondant à une première zone cible (13-1) située dans l'image imprimée (2) apposée sur le substrat (1) ou, dans le cas de la détermination de la deuxième zone cible (13-2), la détection simultanée ou différée d'une deuxième zone de détection (3-2) située dans l'image imprimée (2) et correspondant à la deuxième zone cible (13-2) au moyen d'un capteur d'imagerie (4) et la détermination des données d'image réelles de la deuxième zone de détection (3-2),
d) Comparaison des données d'image réelles captées par le capteur d'imagerie (4) avec les données d'image numériques (12) et détermination de la position (x3-2, y3-2) de la deuxième zone de détection (3-2) dans l'image imprimée (2) apposée sur le substrat (1),
e) Détermination de la position x3-1,y3-1 de la première zone de détection (3-1) dans l'image imprimée (2) sur le substrat (1) à l'aide de la position (x3-2,y3-2) de la deuxième zone de détection (3-2) dans l'image imprimée (2) ainsi que d'une différence de position définie (xd,yd) de la première zone de détection (3-1) par rapport à la deuxième zone de détection (3-2), **caractérisé en ce que**, en cas de dépassement d'une valeur limite d'un écart de position (xa,ya) entre la position (x13-1, y13-1) de la première zone cible (13-1) et la position (x3-1, y3-1) de la première zone de détection (3-1), les données spectrales réelles sont rejetées comme non valides.

2. Procédé selon la revendication 1, **caractérisé en ce que** les étapes b) à e) sont répétées pour au moins une image imprimée suivante (2) apposée sur le substrat (1).

3. Procédé selon l'une des revendications 1 à 2, **caractérisé en ce que,** lors de l'étape a) du procédé, une pluralité de premières zones cibles (13-1) ou une pluralité de premières zones cibles (13-1) et une pluralité de deuxièmes zones cibles (13-2) sont définies, et **en ce que** les étapes b) à e) sont exécutées pour la pluralité de zones cibles (13) et les zones de détection (3) qui leur sont respectivement associées.

4. Procédé selon l'une des revendications 1 et 3, **caractérisé en ce qu'**une caméra CCD ou une caméra CMOS est utilisée comme capteur d'imagerie (4).

5. Procédé selon l'une des revendications 1 à 4, **caractérisé en ce que** les étapes du procédé sont exécutées à l'intérieur ou à l'extérieur d'une machine d'impression et/ou simultanément ou de manière différée par rapport à la fabrication d'un produit imprimé.
